# EUROPEAN PATENT APPLICATION

(11) **EP 4 729 023 A1**
(43) Date of publication of application: **22.04.2026**
(21) Application number: 24207589.3
(22) Date of filing: 18.10.2024
(51) Int. Cl.: A61C 17/06

(54) **SUCTION DEVICE FOR SUCTIONING MATERIAL DURING A DENTAL TREATMENT, KIT INCLUDING A SUCTION DEVICE AND A METHOD FOR ATTACHING A MIRROR ELEMENT TO THE SUCTION DEVICE**

(71) Applicant: Ferton Holding S.A., 2800 Delémont (CH)
(72) Inventor: Donnet, Marcel, 01630 Saint Jean de Gonville (FR); Nicolas, Velasquez, 01210 Ferney-VoltaireFrance (FR)
(74) Representative: Müller Schupfner & Partner Patent- und Rechtsanwaltspartnerschaft mbB (Muc)

(57) **Abstract**

A suction device (1) for suctioning material during a dental treatment, the suction device (1) comprising a handpiece (10), which comprises a suction aperture (15) to allow passage of suctioned material and a suction channel (50) to lead the suctioned material away,
wherein the suction device (1) comprises an interface section being configured to attach a mirror element (40) to the suction device (1), wherein the interface section comprises a guiding element (43) to guide the mirror element (40) to its final position during attaching the mirror element (40).

## Description

The present invention concerns a suction device for suctioning material, such as splatter (water / saliva projection / bacteria) and aerosol (small contamination in air), during a dental treatment, a kit comprising such a suction device and a method for attaching a mirror element to such a suction device.

Suctioning material during a dental treatment is well-known from the prior art. Typically, materials, such as biofilm, saliva, living material debris and other projections, are removed by aspirating systems, which are placed inside the mouth of the patient during the treatment. In particular, the present invention concerns a suction device for suctioning material during the dental treatment, which is used together with a scaler or a powder jet device. The use of such a tool, namely of a scaler or a powder jet device, creates specific challenges for an effective suctioning and splatter protection, since the interaction of the tool and the teeth in the mouth region of the patient creates a large amount of splatter, which actually could exit the mouth region.

The prior art knows, for example, the subject matter of EP 3 145 442 B1, concerning an aspirating system, which, during the operation, is inserted in the mouth of a patient and extends across the whole inside of the mouth. In particular, the aspirating device of EP 3 145 442 B1 includes two wall sections having aspirating openings being arranged inside the side wall sections, the side wall sections being located opposite to each other. A space between the walls being opposite to each other is closed during the aspirating operation.

Considering above, it was an object of the present invention to provide a suction device simplifying the handing of the suction device for an operator during treatment.

The problem is solved by a suction device according to claim 1, a kit according to claim 13, a suction device according to claim 14 and a method according to claim 15. Advantageous embodiments are discussed and described in the description of the figures and the dependent claims.

According to a first aspect of the present invention, a suction device for suctioning material during a dental treatment is provided, the suction device comprising a handpiece, which comprises a suction aperture to allow passage of suctioned material and a suction channel to lead the suctioned material away, wherein the suction device comprises an interface section, being configured to attach a mirror element to the suction device, wherein the interface section comprises a guiding element to guide the mirror element to its final position during attaching the mirror element.

Contrary to the state of the art, the present invention suggests a guiding element, which is used to arrange the mirror element at its desired and intended position. This simplifies the attachment process. As a result, a fast insertion or exchange of the mirror element is possible. This is especially of benefit in case of the intended use of the suction device, namely together with another dental tool, which operates a treatment zone, while the suction process takes care of removing the splatter from the same treatment zone. As a result of this interaction, there is an increased risk that the mirror element is damaged. As a result, by using the guiding element it is now possible to remove or replace the mirror element in a fast manner, such that the treatment can be continued and the mirror element allows visual access to the treatment zone during the whole treatment. This in turn allows the operator to concentrate on the handling of the dental tool, while they can observe a treatment zone by using the mirror element and make sure that the splatter is removed from the treatment zone.

Preferably, the guiding element is a track, for example a track system, which includes, for example two tracks being opposite to each other. A distance between the tracks might decrease along an introduction direction to support the fixation of the mirror element, wherein the mirror element is moved along the introduction direction during attaching the mirror element, i. e. during an introduction movement. It is also conceivable that the tracks extend parallel to each other. The distance between the tracks corresponds to a diameter of the mirror element or is even smaller to create a clamping effect. The guiding element might also be formed as a slot, into which the mirror element is inserted. Alternatively, there are also other conceivable guiding elements, which can be used to guarantee that the mirror element is placed at its correct position during an introduction movement. Preferably, the introduction movement is a simple shift movement along a direction, being preferably parallel to a longitudinal direction of the handpiece. However, it is also conceivable that the introduction movement is performed along a circular or arched path at least partially. It is also conceivable that the mirror element is attached to the suction device by an introduction movement, being slanted or even perpendicular to the longitudinal direction of the handpiece. The guiding means are configured such that the mirror element can be pushed along the introduction direction until the mirror element abuts against a stopping element, being preferably part of a receiving section, such as a side wall of a recess or a pin. The final position preferably corresponds to the position intended for the mirror element in an attached status. Preferably, it is provided that the mirror element is removably attached to the suction channel. This allows an exchange of the mirror element.

Preferably, it is provided that a main extending plane of the mirror element is slanted relative to a plane extending through the suction aperture. This allows an optimal arrangement, i . e. orientation, of the mirror element for having visual access to the treatment zone during the treatment.

Preferably, it is provided that the interface section comprises a plug-in mechanism to attach the mirror element to the suction channel. Such a plug-in mechanism creates a releasable form-fitting and/or force-fitting connection between the mirror element and the suction device and allows a very simple and easy exchange of the mirror element. As already indicated, this has benefits, especially in context of the intended use together with a dental tool, being localized in a working channel of the suction device. In this environment the mirror element might be damaged to some extent during the dental treatment.

Furthermore, it is provided that the interface is arranged at an inner side of the suction channel. Contrary to approaches from the prior art, it is intended to localize the mirror element at the inner side of the suction channel such that it can be avoided by the operator to switch, turn or flip the suction device for using the mirror element. However, in this context the mirror element usually faces the dental tool, which is used in addition to the suction device.

Preferably, the mirror element is attached to the inner side of the suction channel by a form - fitting connection, a force - fitting connection and/or an adhesive connection. Preferably, the mirror element is attached to the inner side in a removable way. This allows the exchange of the mirror element.

It is also conceivable that the mirror element can be exchanged, for example for some curing process, which is used to cure a dental mass needing a specific wavelength of light for curing. By adapting the mirror element to the very specific wavelength, it is possible to increase the amount of light, being effectively used to cure, in order to accelerate the curing process. As a result, the suction device can be used for a plurality of different dental treatments, including the curing process of different dental masses being used in a dental treatment process, and especially allows adapting the suction device to the individual needs of the treatments, just be exchanging the mirror element.

Preferably, it is provided that the suction device has a slit different from the suction opening. In particular, the slit is intended to be used for inserting the mirror element into the suction device, in particular such that the inserted mirror element is received by the guiding elements. Via the slit, the mirror element is introduced into the guiding element. Particularly, by just pressing the mirror element into the slit, the mirror element is automatically moved and shifted to the correct and intended final position of the mirror element. This simplifies the exchange of the mirror element. Preferably, the slit is formed at the backside of the suction channel, the backside being opposite to the suction aperture or opening, which is used to pass the sucked material into the suction channel.

The suction channel is preferably oval or is at least flat, in a cross section being mainly perpendicular to the longitudinal direction of the handpiece. The suction channel has a modifying radius of curvature, in particular a nearly flat section opposite to the suction aperture. This simplifies mounting the flat mirror element and provides furthermore a space economic designed suction device, which can be easily orientated in a mouth of a patient. In other words: it is possible to easily create flat region, which is suitable to attach the mirror element without losing space, which is needed

Preferably, it is provided that the suction channel has a recess at its inner side, the mirror element being arranged in the recess in an attached status. Actually, this recess allows the arrangement of the mirror element at least partially inside the wall forming the suction channel. As a result, a portion of the mirror element, protruding into the suction channel, is reduced such that the mirror element does not hinder the stream of material, being transported through the suction channel. Preferably, it is provided that the mirror element still protrudes from the recess for providing a section, which is easy to grip, for example by a finger of the operator to push the mirror element fast out of the recess for an exchange of the mirror element. Preferably, the recess is at least partially shaped in correspondence to the shape of the mirror element. Thus, it is possible to guarantee that the correct type of mirror element is introduced into the recess.

Preferably, it is provided that the suction channel has a lateral opening to retain the mirror element. The lateral openings are arranged along a direction being perpendicular to the introduction direction. A cross section of the lateral opening is preferably smaller than the cross section of the slit. Preferably, there are at least two lateral opening opposite to each other in a direction perpendicular to the longitudinal direction. Actually, the lateral opening is intended to receive a radial section or an outer edge of the mirror element and to clamp the mirror element in a position, fixed in a direction, being for example parallel to the introduction direction. This allows a very easy clamping mechanism, without adding additional components into suction channel. The lateral opening is preferably formed or determined by a web element, which connects opposite sides of the suction channel.

Preferably, it is provided that the handpiece, in particular the suction channel, is made by a molding material. Preferably, the material is elastic, especially such that for example a web, limiting the lateral opening, can be elastically deformed during the attachment process and causes a grasping or gripping of the mirror element in the attached position. In other words: the suction device is made from a material, which allows that the side walls of the suction device in the region of the attached mirror element are deformed outwardly during the attachment process, such that a restoring force, acting inwardly, guarantees or makes sure that the mirror element stays attached to the desired position.

Another aspect of a preferred embodiment is an attachment for splatter protection designed for being mounted on the handpiece. The attachment comprising
- a mounting section for an exchangeable or a permanent mounting of the attachment to the handpiece,
- a suction opening for the passage of suction material through the suction opening and the suction aperture when the attachment is mounted on the handpiece and
- at least a sidewall extending from the suction opening and forming a working channel designed to surround a molar partially or at least two sides of the molar and, in particular simultaneously to house a dental tool, the channel having at least one introduction section for introducing a dental tool into the working channel.

As a consequence, it is in an advantageous manner possible to form a working channel for reducing the volume above a tooth, wherein suction is applied, such that the sucking efficiency can be increased. In particular, it is possible to reduce the volume, experiencing a high suction force, and thus an effective suction can be established. As a consequence, it is possible to cover the molars in a dome like manner by arranging the attachment above the teeth, in particular above the treatment zone. Preferably, the suction device is formed like a tooth brush for best accessibility to all mouth areas. Besides creating a high suction volume around the treatment zone, it is also possible to avoid a reduction of visibility of the treatment zone. The arrangement above the treatment zone and/or the tool is even possible in case of the molars. The covering in the dome like manner supports a splatter protection by the inner sides of the side wall, which can be arranged very close to the teeth for increasing the efficiency of splatter protection. Especially, the geometry of the attachment allows even placing an additional tool, such as scaler or a powder jet device between the attachment and the treatment zone or the tooth. Particularly, "at least partially" surrounding the molar means that at least two sides, preferably three sides, of the molar can be covered.

Moreover, it is provided that a suction device comprises a groove for attaching the attachment to the handpiece, wherein the slit is incorporated in the region outside of the groove. This allows a removal or exchange of the mirror element even in cases in which the attachment is attached to the suction device.

Furthermore, it is provided that the working channel is configured to surround several teeth at the three sides and extends along a direction being mainly parallel to a longitudinal direction of the handpiece or along a direction being mainly slanted about up to 45°, preferably up to 30 ° and most preferably up to 15° relative to the longitudinal direction of the handpiece.

Another aspect of another subject matter of the present invention is a kit comprising the suction device according to the invention and the mirror element. All the benefits being discussed in context of the suction device, as well as its specifications apply analogously for the kit and vice versa.

Another subject matter of the present invention is a suction device including the mirror element. All the embodiments or specifications and benefits being discussed previously apply analogously to the suction device according to this device.

Another subject matter of the present invention is a method for attaching a mirror element to the suction device according to the present invention comprising
- providing the handpiece and the mirror element and attaching the mirror element at the inner side of the suction chamber.

All the benefits and the specifications being discussed in context of the suction device applies analogously to the method for attaching the mirror element. In particular, it turned out to be beneficial to provide the mirror element or attach the mirror element by an introduction movement. The introduction movement introduces the mirror element into the suction device and is preferably performed by a shift or push movement. By shifting the mirror element into the slit of the suction device, the insertion process is started and the guiding elements take over for localizing the mirror element at its correct position while the operator just pushes the mirror element into the suction device.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: schematically illustrates a suction device for suctioning material during a dental treatment during use
- **Fig. 2**: schematically illustrates the suction device of figure 1 in two side views
- **Fig. 3**: schematically illustrates the suction device of figure 1 in another side view,
- **Fig. 4**: schematically illustrates the suction device of figure 1 in a perspective view
- **Fig.5**: schematically shows a suction device according to a preferred embodiment of the present invention in two perspective views,
- **Fig.6**: schematically shows the suction device of Fig. 5 without a mirror element and
- **Fig. 7**: schematically shows a front view on the suction aperture of the suction device of the figures 5 and 6

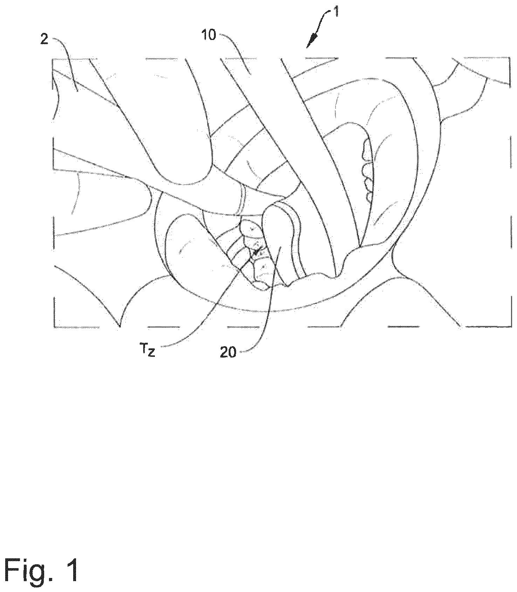

In **Fig. 1** a suction device 1 for suctioning material during a dental treatment according to preferred embodiment of the present invention is shown during its use. In particular, such a suction device 1 for suctioning material is intended to remove material during the treatment, the material being for example splatters and/or aerosols, which would otherwise collected or accumulated in a treatment zone TZ and could hinder the operator to properly treat a target in the treatment zone TZ, i. e. a surface area of a tooth.

In particular, the suction device 1 for suctioning material during the dental treatment is intended and configured such that it can be used simultaneously with an independent tool 2, which during operation treats the tooth. The term "independent" means that the suction device 1 for suctioning material during the dental treatment on the one hand and the tool 2 on the other hand can be moved relative to each other and they are not fixed to each other in a rigid manner. Preferably, the tool 2 is a scaler or a powder jet device for removing calculus and/or biofilms from the surfaces of the tooth. Using such a tool 2 is usually accompanied by an intense splatter formation, which actually can even exit the mouth region of a patient.

For reducing the amount of splatters, which exit the mouth region during the operation, an attachment 20 is arranged at a distal end section 11 of the suction device 1 for suctioning material during dental treatment. In particular, the attachment 20 is configured such that it can be used together with the tool 2, preferably a scaler and a powder jet device, in particular a nozzle head of the powder jet device. As a result, suction device 1 and tool 2 can be placed in a mouth of the patient and orientated simultaneously. Especially, it is possible to place the attachment 20 above the tool 2 during the treatment in order to cover the treatment zone TZ and/or the tool 2 in a dome like manner.

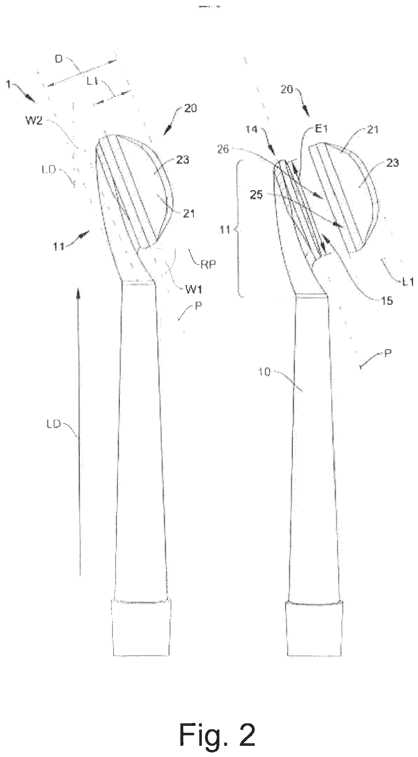

In **Fig. 2** the suction device 1 for suctioning material during the dental treatment of Fig. 1 is illustrated schematically in two side views. The suction device 1 for suctioning material during the dental treatment comprises a handpiece 10, extending along a longitudinal direction LD, and an attachment 20, being preferably removable attached to the handpiece 10. In particular, the handpiece 10 comprises a suction aperture 15, being in particular located at a distal end section 11 of the handpiece 10. Especially, it is provided that the suction aperture 15 extends in a plane P, which is slanted relative to a reference plane RP, which extends perpendicular to the longitudinal direction LD of the handpiece 10, preferably about a first angle W1 between 70° and 90°, more preferably between 75° and 85° and most preferably between 75° and 80°. As a result, the suction aperture 15 has a non-circular cross section, preferably an oval cross section, having a first extension E1 and/or / a second extension E2, the first extension E1 and the second extension E2 corresponding to the respective maximum extensions of the suction aperture 15 along two direction, being perpendicular to each other in the plane P, being slanted relative to the reference plane RP. Preferably, the suction opening 26 is arranged at least partially in front of the suction aperture 15 and/or the suction opening 26 is orientated in a slanted manner with respect to the suction aperture 15.

As a result, the suction aperture 15 represents a comparable large dimensioned opening, which allows collecting and removing plenty of material during the aspiration process. Furthermore, it is provided the distal end section 11 of the handpiece 10 is slanted relative to the longitudinal direction LD about a second angle W2 between 1° and 40°, more preferably between 1° and 25°, and most preferably between 1° and 20°.

In the suction device 1, being illustrated in the top illustration of figure 2, the attachment 20 is mounted to the handpiece 10, in particular to the suction aperture 15 of the handpiece 10. In the lower illustration of Fig. 2 the attachment 20 is spaced from the suction aperture 15 of the handpiece 10.

In particular, it is provided that the attachment 20 has a suction opening 26, which is passed by the material being aspirated during its use. Especially, the suction opening 26 is formed by a non-circular ring element, which preferably includes a mounting section 25, being intended to support fixing the attachment 20 to the distal end section 11 of the handpiece 10, in particular in front of the suction aperture 15.

Preferably, it is provided that the handpiece 10, in particular the distal end section 11 of the handpiece 10, and the attachment 20 are configured to form a snap connection for establishing a reversible connection between the handpiece 10 and the attachment 20. For example, the attachment 20 is made from a material, being more flexible and/or elastic compared to the material of the distal end section 11 of the handpiece 10 such that the mounting section 25, in particular the ring-shaped mounting section 25, can be pulled onto the distal end section 11 of the handpiece 10 having the suction aperture 15.

Especially, the mounting section 25 of the attachment 20 interacts with a collar section 14, which surrounds the suction aperture 15 of the distal end section 11 of the handpiece 10. Furthermore, the collar section 14 and the distal end section 11 of the handpiece 10 interact with the mounting section 25 in a form fitting and/or force fitting way in a direction being perpendicular to the plane P of the suction aperture 15.

Especially, the suction aperture 15 and the suction opening 26 have mainly the same shapes and sizes such that mounting the attachment 20 to the handpiece 10 does not reduce the cross section of an opening, being used for suctioning the material during the use of the suction device 1. Preferably, the attachment 20 includes a side wall 23 extending or protruding from the mounting section 25 of the attachment 20.

The side wall 23 of the attachment 20 is modulated in its lengths, being measured along a direction being perpendicular to the suction opening 26 or the plane P. In particular, the side wall 23 has at least one side wall section 21, which extends over a length L1 from the suction opening 26 at the mounting section 25. Especially, two side wall sections 21 are located on opposite sides of the suction opening 26 of the attachment 20 and form a working channel 30. The working channel 30 is dimensioned such that a high suction volume can be guaranteed and simultaneously the inner side of the side wall 23 can be used as splatter protection. Preferably, the suction device 1 having the attachment 20 is configured similar to a tooth brush for guaranteeing an optimal accessibility to all teeth, especially to the molars. Especially, the lengths L1 being assigned to the side wall section 21 represents a maximum length of the side wall 23 protruding from the mounting section 25 into a direction being substantially perpendicular to the plane P of the suction opening 26. The side wall 23 can extend perpendicular to the plan P of the suction opening 26 or slanted relative to a direction being perpendicular to the plan P of the suction opening 26.

Especially, the side wall sections 21, having the maximum lengths, are arranged in a mirror symmetric manner relative to an axis of the suction opening 26, the axis being the large axis or the first extension E1 of the cross section of the suction opening 26 and/or the axis mainly extending parallel to the longitudinal direction LD.

Moreover, it is preferably provided, that the maximum length L1 of the side wall section 21 is smaller than the maximum extension of the cross section of the suction opening 26 and/or the suction aperture 15 of the suction device 1. In particular, the length L1 is smaller than both the extension along the large axis, i. e. the first extensions E1, and the small axis, i. e. a second extension, of the oval cross section, being assigned to the suction opening 26. In other words, the side wall sections 21, protruding from the distal end section 1 of the handpiece 10 in the mounted state, are comparably small and support the additional use of a tool 2, which for example could be located between the treatment zone, i. e. the tooth, and the suction device 1 for suctioning material during the dental treatment. Especially, it turned out that said specific geometry allows an effective removing of material and hinders splashes, which are generated during the treatment, in particular during a treatment of a tooth by a scaler and/or a powder jet device, from exiting the treatment zone TZ or the mouth of the patient.

In particular, the suction device 1 has a thickness D at the distal end section 11 including the suction aperture 15 of less than 25 mm, preferably less than 20 mm and most preferably less than 18 mm. Furthermore, a maximum length L1 of the side wall 23 is preferably between 3 and 20 mm, preferably between 8 and 14 mm and most preferably about 12 mm.

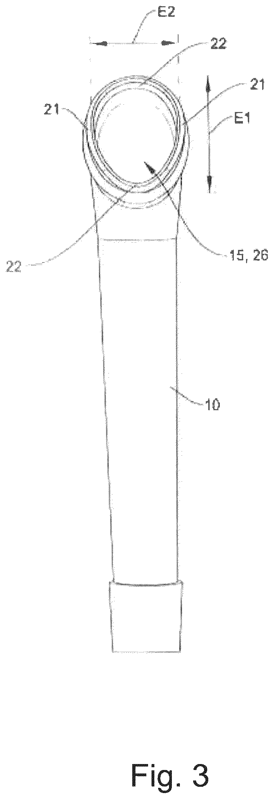

In Fig. 3 another side view of the suction device 1 for suctioning material during dental treatment according to the preferred embodiment is illustrated. Actually, the side view includes a top view on the suction aperture 15 and the suction opening 26, having preferably a first extension E1 and a second extension E2, the first extension E1, being the maximum extension along the longitudinal direction LD of the handpiece 10, while the second extension E2, being the maximum extension of the suction aperture 15 and/or suction opening 26 extending along a direction, being perpendicular to the first extension E1 and the longitudinal direction LD of the handpiece 10.

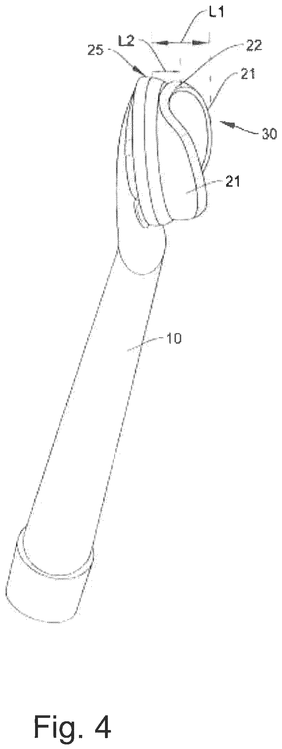

In **Fig. 4** the suction device 1 for suctioning material during dental treatment is illustrated schematically in a perspective view. This perspective view shows that the side wall 23 is modulated regarding its lengths L1 and in particular includes further side wall sections 22 being located opposite to each other, in particular opposite to each other along a direction, which mainly extends perpendicular to the longitudinal direction LD of the handpiece 10. The further wall sections 22 has a further length L2, being smaller than the length L1 of the side wall section 21 such that the suction device 1 for suctioning the material can be located above or below the treatment zone TZ such that the side wall sections 21, including the maximum length L1, extends mainly parallel to the arrangement of the teeth in the mouth of the patient. Furthermore, the reduced further length L2 of the further side wall section 22 allows simultaneously to place the nozzle head and/or another tool 2 between the suction device 1 and the teeth.

Furthermore, the length L1 of the side wall 23, protruding from the mounting section 25 changes continuously from the side wall section 21 to the further side walls section 22, in particular without sharp modifications in its course for avoiding any hurts of the patient during the treatment.

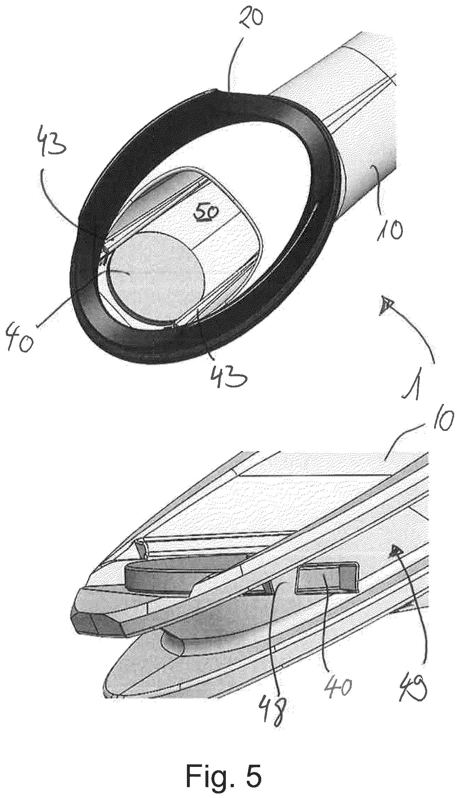

In **figure 5** two illustrations are shown, presenting two different perspective views to a suction device 1 according to an exemplary embodiment of the present invention. In particular, the embodiment shown in figure 5 includes a mirror element 40, being attached to the suction device 1. In particular, the mirror element 40 is attached to the suction device 1 in an interface section being arranged at the inner side of a suction channel 50. In particular, the reflecting side of the mirror element 40 faces the suction aperture 15 and is localized at the inner side of the suction channel 50. This allows using the mirror element 40, while operating with another dental tool, especially working with the tool in the working channel 30. The mirror element 40 is circular, for example. As a result, it is possible to have a view on the treatment zone during the treatment without turning or flipping the suction device 1, being necessary for those suction devices 1, which have a mirror element 40 at the backside of the suction channel 50.

Furthermore, the suction device 1 of this embodiment has a guiding means or guiding element 43 to guide the mirror element to its position during attaching the mirror element 40.

In case of the illustrated embodiment, the guiding element is a track or rail - like element. In particular a pair of tracks is arranged opposite to each other in a direction being perpendicular to the longitudinal direction of the suction device 1. The tracks determine an introduction direction, along which the mirror element 40 is introduced into the suction device 1. The tracks are dimensioned such that a head bulge is directed to the centre of the suction device 1, preferably in a height, which corresponds to a thickness of the mirror element 40 being arranged inside the suction device 1 or which is smaller than the thickness of the mirror element 40. As a result, it is additionally possible to create clamping force, also by the track system or track element, which is used to guide the mirror element 40 during its attachment process. A width of the bulge, measured in a direction perpendicular to the introduction direction, decreases along the introduction direction.

In particular, the suction device 1 has a slit 55, being configured to insert the mirror element 40 via the slit 55 into the suction device 1 such that the guiding element 43 receives the mirror element 40 being introduced into the suction device 1 via the slit 55. Preferably, the slit 55 is arranged at the suction device 1, in particular at the backside of the suction channel 50, in a section being opposite to the suction aperture 15. Preferably, the suction aperture 15 does not extend over the same size as the suction opening of the attachment 20 being illustrated in the previous figures in more detail.

Furthermore, the suction device 1, especially the suction channel 50 of the embodiment illustrated in figure 5, includes openings 47, in particular lateral openings 47, to retain the mirror element 40. Especially, these lateral openings 47 are configured and designed to receive an outer rim or outer edge of the mirror element 40 and to fix the mirror element 40 at the suction device 1, especially at the inner side of the suction device 1 to avoid any movements along a direction being parallel to the longitudinal direction or the introduction direction. Preferably, it is provided that the suction device 1 is made from an elastic material, such as a plastic such that a web 48, which is arranged between the slit 55 and the lateral opening 47, can be deformed during the attachment process and clamp the mirror element 40 in its designated and desired position.

In the lower illustration of figure 5, the attachment 20 is removed such that you have visual access to the region, being used to attach the attachment 20 to the suction device 1. This region is formed by a groove 49, which receives a collar shaped section of the attachment 20, which can easily be attached to the suction device 1 for example by pulling it over the suction aperture 15 of the suction device 1. In particular, it is provided that the lateral opening 47 is arranged inside this groove 49, while the slit 55 is arranged outside of this groove 49. This allows for example attaching the mirror element 40 even in case of a mounted attachment 20 creating the working space. This is of benefit if you are interested in a fast exchange of the mirror element 40 during a treatment. For inserting, especially plugging the mirror element 40 into its position, in particular at its inner side of the suction channel 50, the mirror element 40 can be inserted into the slit 55 and by a force, which mainly acts along a direction being opposite to the longitudinal direction or parallel to the longitudinal direction, the mirror element 40 can be shifted to its position due to the guiding elements 43, which make sure that the mirror element 40 is transferred to its desired final position. A removal of the attachment 20 is not necessary.

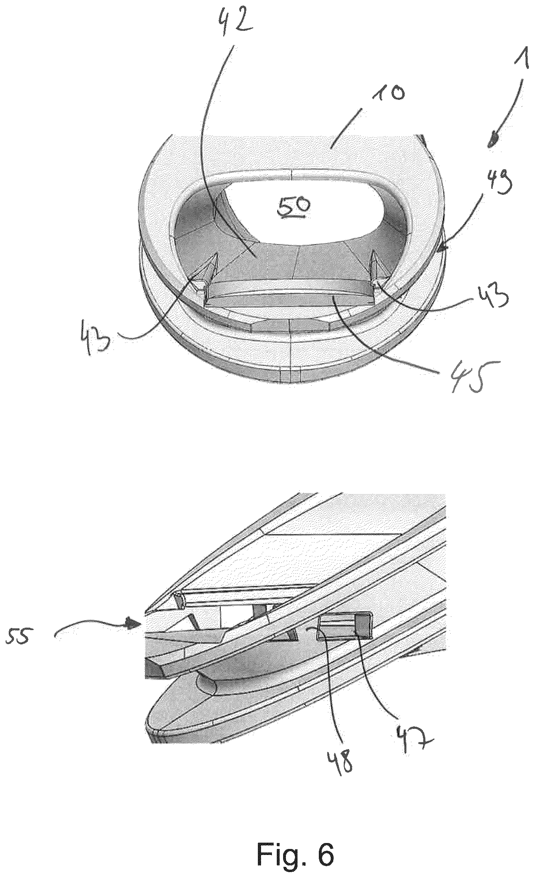

In **figure 6** the mirror element 40 being attached in the embodiment illustrated in figure 5 is shown. In particular, it is shown that the suction channel 50 has at its inner side a recess 45, being shaped and configured for receiving the mirror element 40. In particular, this recess 45 is intended to arrange and/or fix the mirror element 40 at the inner side of the suction device 1 without significantly decreasing the cross section of the suction device 1. The recess 45 is preferably incorporated at least partially in a wall forming the suction channel 50. Otherwise, the mirror element 40 could block the suction material. However, by using this recess 45 the cross section, which can be used for the sucked material, is not significantly decreased. Preferably, it is provided that the recess 45 has a depth, which is smaller than a height of the mirror element for simplifying removing of the mirror element 40, preferably just by pressing the mirror element 40 into a direction being opposite to the introduction direction. Since the inserted or attached mirror element 40 protrudes from the inner side of the suction channel 50, the mirror element 40 at least partially protrudes from the general course of the inner side of the suction channel 50. This allows an easy access for a finger of the operator to push the mirror element 40 out of the recess 45 and out of the slit 55. Preferably, the recess 45 is formed only partially and is not continued in a section which faces the slit 55, via which the mirror element 40 is inserted into the suction device 1. As a result, the recess 45 does not hinder the insertion process during the attachment.

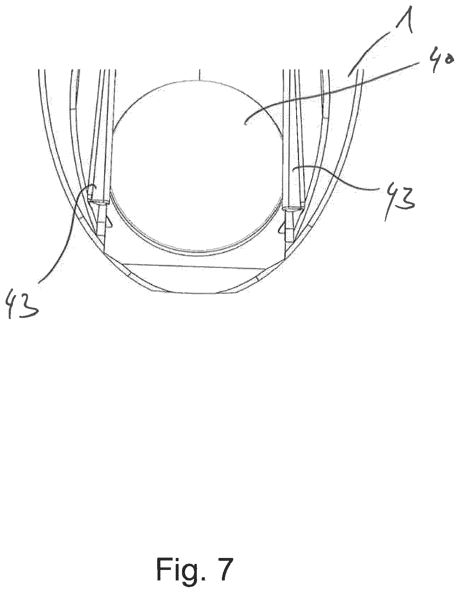

In **figure 7** the attached mirror element 40 is shown together with the guiding means 43 being formed by tracks. Especially, it is shown and illustrated that the tracks have a bulge at their topside, which tapers along a direction facing away from the slit 55. During the introduction movement the outer edge of the mirror element 40 is arranged between the recess 45 and the bulges of the tracks.

### Reference list:

- 1: suction device
- 2: tool
- 10: handpiece
- 11: distal end section
- 14: collar section
- 15: suction aperture
- 20: attachment
- 21: side wall section
- 22: further side wall section
- 23: side wall
- 25: mounting section
- 26: suction opening
- 30: working channel
- 40: mirror element
- 43: guiding element
- 45: recess
- 47: lateral opening
- 48: web element
- 49: groove
- 50: suction channel
- 55: slit
- P: plane
- RP: reference plane
- L1: length
- L2: further length
- LD: longitudinal direction
- D: thickness
- W1: first angle
- W2: second angle
- E1: first extension
- E2: second extension
- T_{Z}: treatment zone

## Claims

1. A suction device (1) for suctioning material during a dental treatment, the suction device (1) comprising a handpiece (10), which comprises a suction aperture (15) to allow passage of suctioned material and a suction channel (50) to lead the suctioned material away,
wherein the suction device (1) comprises an interface section being configured to attach a mirror element (40) to the suction device (1), wherein the interface section comprises a guiding element (43) to guide the mirror element (40) to its final position during attaching the mirror element (40).

2. The suction device (1) according to claim 1, wherein the interface section comprises a plug-in mechanism.

3. The suction device (1) according to one of the preceding claims, wherein the mirror element (40) is removably attached to the suction channel (50).

4. The suction device (1) according to one of the preceding claims, wherein the interface section is arranged at an inner side of the suction channel (50).

5. The suction device (1) according to one of the preceding claims, wherein the mirror element (40) is attached to the suction channel (50) by a form-fitting connection, a force-fitting connection and/or an adhesive connection.

6. The suction device (1) according to one of the preceding claims, wherein the suction device (1) has a slit (55) different from the suction aperture (15) to insert the mirror element (40) during attaching the mirror element (40).

7. The suction device (1) according to one of the preceding claims, wherein the suction channel (50) has a recess (45) at its inner side, the mirror element (50) being arranged in the recess (45) in an attached status.

8. The suction device (1) according to one of the preceding claims, wherein the suction channel (50) has a lateral opening (47) to retain the mirror element (40) at least partially.

9. The suction device (1) according to one of the preceding claims, wherein the handpiece (10) is made by molding material.

10. The suction device (1) according to one of the preceding claims, further comprising an attachment (20) for splatter protection designed for being mounted on the handpiece (10), the attachment (20) comprising:
-- a mounting section (25) for an exchangeable or a permanent mounting of the attachment (20) to the handpiece (10),
-- a suction opening (26) for the passage of suctioned material through the suction opening (26) and the suction aperture (15) when the attachment (20) is mounted on the handpiece, and
-- at least a side wall (23) extending from the suction opening (26) and forming a working channel (30) designed to surround a molar partially or at least two sides of the molar, and, in particular, simultaneously to host a dental tool (2), the channel having at least one introduction section for introduction of a dental tool (2) into the working channel.

11. The suction device (1) according to claim 10, wherein the suction device (1) comprises a groove (49) for attaching the attachment (20) to the handpiece (10), wherein the slit (55) is arranged outside the groove (49).

12. The suction device (1) according to claim 10 or 11, wherein the working channel is configured to surround several teeth at three sides and extends along a direction being mainly parallel to a longitudinal direction (LD) of the handpiece (10) or along a direction being mainly slanted about up to 45°, preferably up to 30° and most preferably up to 15° relative to the longitudinal direction (LD) of the handpiece (10).

13. A kit comprising the suction device (1) according to one of the preceding claims and a mirror element (40).

14. The suction device (1) according to one of the claims 1 to 13 including the mirror element (40) being attached to the suction device (1).

15. A method for attaching a mirror element (40) to the suction device (1) according to one of the preceding claims, comprising:
- providing the handpiece (10) and the mirror element (40) and
- attaching the mirror element (40) at the inner side of the suction channel (50).
